# EUROPÄISCHE PATENTSCHRIFT

(11) **EP 0 504 326 B1**
(45) Veröffentlichungstag und Bekanntmachung des Hinweises auf die Patenterteilung: **04.01.1995**
(21) Anmeldenummer: 91903212.8
(22) Anmeldetag: 06.02.1991
(51) Int. Cl.: F16M 11/42

(54) **FAHRBARER TRANSPORT STATIV ADAPTER**
WHEELED TRIPOD ADAPTER
ADAPTATEUR MOBILE DE TREPIED TRANSPORTABLE

(30) Priorität: 22.03.1990 AT 679/90
(43) Veröffentlichungstag der Anmeldung: 23.09.1992
(73) Patentinhaber: ABERL, Wilhelm, A-1030 Wien (AT)
(72) Erfinder: ABERL, Wilhelm, A-1030 Wien (AT)
(86) Internationale Anmeldenummer: AT9100020
(87) Internationale Veröffentlichungsnummer: WO9114899

(56) Entgegenhaltungen:
- FR-A- 1 008 537
- GB-A- 643 905
- US-A- 2 715 533
- US-A- 3 826 513
- US-A- 3 863 945

## Beschreibung

Den Gegenstand der Erfindung bildet ein Transportwagen für das Fotostativ mit einer Abstellfläche für die Transporttasche für das Fotozubehör, Kamera, Filme, Kassetten usw., entsprechend der Merkmale des Oberbegriffs nach Anspruch 1 (US-A-3 863 945). Das Fotostativ ist mit dem fahrbaren Unterteil fix verbunden um ein Ganzes zu bilden und wird dem Handgriff des Fotostatives wie ein Handwagen gezogen. Da das Fotostativ einen Teil des Transportwagens bildet ist das Fahrzeug sehr leicht und damit für das Fahren auf Fahrbahnen sowie im weglosen Gelände geeignet.

Es sind durch die FR-PS 1 008 537 fahrbare Transportgestelle für Fotostativ und Kamera bekannt geworden, welche aus drei horizontal verlaufenden Trägern bestehen, die mit je einem Spornrad fahrbar sind. Oberhalb der Spornräder sind rohrförmige Vertiefungen vorgesehen, in welchen die Beine des Fotostatives Platz finden. Die horizontal verlaufenden Träger sind zentral verstellbar, durch Verschraubungen verbunden, sodaß die Spreizentfernung der Beine des Fotostatives am Gestell eingestellt werden kann.

Die Beine des Fotostatives sind mit dem Transportgestell nicht fix verbunden und stehen nur infolge der Schwerkraft in den Vertiefungen fest. Das Transportgestell ist daher für den Transport im Gelände nicht geeignet, insbesondere da Spornräder keine Spur halten und bergab rollen.

Beim Erfindungsgegenstand werden diese Nachteile durch die Merkmale des Anspruch 1 überwunden.

Die Spurweite der Räder ist erfindungsgemäß dem Bedarf entsprechend verstellbar, indem der Mittelteil des fahrbaren Unterteiles aus zwei Teilen, den sogenannten Mittelteilen besteht, die durch tragende Verbindungen, vorzugsweise Teleskopverbindungen, in der Entfernung zueinander im entsprechenden Maß verstell- und fixierbar sind.

Bei der Veränderung der Spreizstellung der Beine des Fotostatives durch das Verstellen der Spurweite der Räder ist es erforderlich, daß erfindungsgemäß die äußeren Teile des fahrbaren Untergestelles, an welchen die Räder sitzen, die sogenannten Außenteile, mit den Enden des Fotostatives fix verbunden, vorzugsweise angeschraubt sind, mit den im wesentlichen ebenen Mittelteilen durch eine scharnierartig wirkende Gelenksverbindung verbunden sind, deren Schwenkachse mindestens annähernd parallel zur Fahrtrichtung liegt.

Besondere Ausführungsarten der Erfindung ergeben sich aus den abhängigen Ansprüchen.

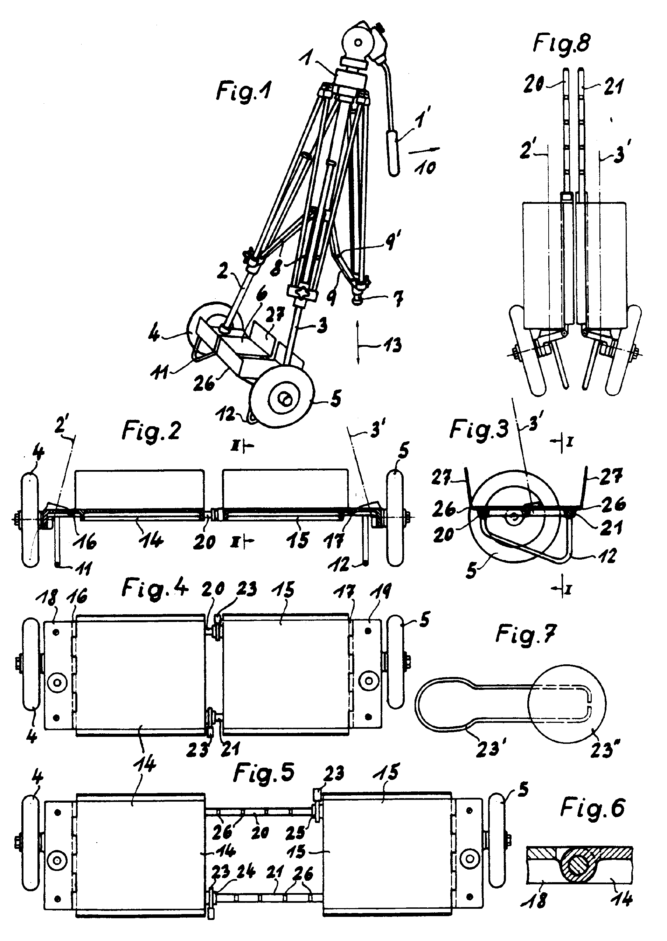

Der Erfindungsgegenstand ist nachstehend anhand der in der Zeichnung dargestellten, als Beispiel dienenden Ausbildungsform des Erfindungsgegenstandes beschrieben und zeigt die Fig. 1 ein Schrägbild des Erfindungsgegenstandes in Fahrstellung, die Fig. 2 die Vorderansicht des mit Rädern fahrbaren Unterteiles teilweise im Schnitt nach Linie II-II der Fig. 3, die Fig. 3 die Seitenansicht nach Linie III-III der Fig. 2, die Fig. 4 die Draufsicht auf den Unterteil bei kleiner Spurweite, die Fig. 5 die Draufsicht bei großer Spurweite, die Fig. 6 einen Schnitt durch die Gelenkverbindung zischen den Außen- und Mittelteilen, die Fig. 7 die Sperrfeder für die Teleskopeinrichtung in Seitenansicht und die Fig. 8 den Unterteil des Erfindungsgegenstandes im zusammengeklappten Zustand.

Wie die Fig. 1 zeigt, steht das Fotostativ 1 mit den Enden der Beine 2, 3 jeweils auf einem Außenteil auf dem die Räder 4, 5 sitzen. Die Beine sind fix verbunden, vorzugsweise angeschraubt, sodaß die im wesentlichen ebene Abstellfläche 6 in ihrer Lage festgehalten ist. Der Transportwagen befindet sich in Fahrstellung, wobei sich das Ende des dritten Beines 7 weit über der Fahrbahn in Hochstellung befindet. Der Handgriff 1 des Fotostatives dient als Handhabe und werden die Zugkräfte bei Fahren wie bei einem Handwagen über die Beine 2, 3 auf die Räder 4, 5 übertragen.

Die Drehaxen der Räder liegen zueinander zeigend quer zur Fahrtrichtung und schließen mit der Verstellrichtung 2′, 3′ (Fig. 2, 8) der Teleskope der Beine 2, 3 wegen der Spreizstellung sichtbar einen fixen stumpfen Winkel ein. Die Streben 8 der Beine 2, 3 sind steif in bekannter Weise mit den Beinen und dem Stern auf der Mittelsäule des Fotostatives gelenkig verbunden und fixiert. Die Strebe 9 des Beines 7 ist nicht steif, sondern besteht aus zwei Laschen die in der Mitte durch die Gelenkverbindung 9′ verbunden sind. Dadurch kann erfindungsgemäß das Bein 7 unabhängig von den Beinen 2, 3 in Richtung zur Mittelsäule verschwenkt werden. Dies ist vorteilhaft bei der Handhabung beim Fahren und ermöglicht das Standbein 7 unabhängig von der Spreizstellung der Beine 2, 3 zu verschwenken, um es im Gelände auf einen entsprechend geeigneten Standplatz abzustellen. Beim Abstellen wird das Fotostativ 1 entgegen der Fahrtrichtung (Pfeil 10) um die Räder verschwenkt, bis die Standbeine 11, 12 sich am Boden abstützen und die Räder 4, 5 abgehoben sind. Das Standbein 7 ist dann in Pfeilrichtung 13 länger ausgefahren als die Standbeine 2 und 3.

Beim Fotografieren, insbesondere Filmen, soll die Mittelsäule des Fotostatives 1 möglichst senkrecht stehen. Um dies im unebenen Gelände zu erreichen, müssen auch die Teleskope der Beine 2 und 3 verschieden lang ausgefahren sein. Um dies zu ermöglichen sind, wie die Fig. 2 und 3 zeigen, die im wesentlichen ebenen Mittelteile 14, 15 durch Gelenkverbindungen 16, 17 mit den Außenteilen 18, 19 verbunden. Die Schwenkachse der Gelenkverbindungen 18, 19 liegen mindestens annähernd parallel zur Fahrtrichtung, sodaß beim Einstellen der Mittelsäule die Verstellrichtungen 2′, 3′ der Beine 2, 3 gegenüber der Horizontalen verschwenken und die Räder 4, 5 im gleichen Maß mitverschwenkt werden.

Es ist vorteilhaft, zwecks Verbesserung der Standfestigkeit, die Entfernung der Standbeine 11, 12 und damit auch die Spurweite der Räder 4, 5, wie in der Fig. 5 dargestellt, zu vergrößern. Dies ist erfindungsgemäß dadurch gelöst, daß die Mittelteile 14, 15, zwecks Verstellung der Spurweite der Räder, durch tragende Teleskopverbindungen 20, 21 in der Entfernung zueinander verstell- und fixierbar sind.

Zum Fixieren sind Rastglieder 23 vorgesehen, die, wie die Fig. 7 zeigt, aus einem ösenförmig gebogenen Federstahlband 23′ oder Federstahldraht besteht, dessen Enden in einem vorzugsweise aus gummiweichen Kunststoff bestehenden Griffstück 23˝ eingeschlossen sind. Die Rastglieder 23 sitzen auf Fortsätzen 24, 25 der Mittelteile 14, 15 in Fahrtrichtung verschiebbar fest. Die Mittelteile 14, 15 sind vorteilhaft aus leichtem, dünnwandigem Kunststoff mit Verrippungen und Durchbrüchen (nicht dargestellt) zwecks Gewichtserleichterung ausgeführt.

Die tragenden Teleskopverbindungen 20, 21 bestehen aus federelastischem Rundstahl, an welchen in entsprechenden Abständen Raststellen 26 für das Federstahlband 23′ vorgesehen sind. Das Federstahlband kann mit seiner ösenförmigen Erweiterung unter Kraftwirkung auffedernd über die Fortsätze 24, 25 der Mittelteile geschoben werden, wonach es in eine passende Vertiefung einrastet und verschiebbar festsitzt. Der Rundstahl 20 sitzt im Mittelteil 14 fest (umspritzt) und ist in einer Bohrung im Teil 15 teleskopartig verschiebbar. Der Rundstahl 21 sitzt im Mittelteil 15 fest und ist im Mittelteil 14 verschiebbar. Der Außendurchmesser der Rundstähle 20, 21 ist kleiner als die ösenförmige Erweiterung des Federbandes 23′. Die Schmalstelle paßt in die Raststellen 26 der Rundstäbe 20, 21.

Die Abstützpunkte der Standbeine 11, 12 sind, wie die Fig. 3 zeigt, von den Rädern 4, 5 distanziert, sodaß die Räder abgehoben werden können. Die Standbeine 11, 12 bestehen vorteilhaft aus angeschraubten Metallbügeln, sodaß sie nach einer Beschädigung ausgewechselt werden können. An den quer zur Fahrtrichtung liegenden Rändern 26 der Mittelteile 14, 15 sind zum Festhalten der Transporttasche aufragende Seitenwände 27 angeordnet. Werden die Mittelteile 14, 15 mehr als in der Fig. 5 dargestellt voneinander distanziert, so werden die Enden der Rundstäbe 20, 21 aus ihren Bohrungen gezogen, wonach die Mittelteile 14, 15, wie in der Fig. 8 dargestellt, mit nach oben zeigenden Rundstählen 20, 21 aneinander gestellt werden können. Die Beine 2 und 3 bleiben fix mit den Außenteilen 18, 19 verbunden und bleibt der Transportwagen auch im zusammengelegten Zustand mittels der Räder 4, 5 fahrbar. Im zusammengelegten Zustand kann der Transportwagen in den Abstellraum gestellt, in der Bahn transportiert oder in den Kofferraum gepackt werden und ist nach wenigen Handgriffen wieder in Gebrauchsstellung. Anstelle der Rundstähle 20, 21 können vorteilhaft tragfähige Teleskopverbindungen aus Profilstahl, Aluminium oder Kunststoffteilen verwendet werden.

## Patentansprüche

1. Transportwagen mit mindestens 2 Rädern und einem Stativ wobei zwei Beine (2, 3) des Statives (1) an den Enden mit dem Transportwagen fix verbunden, vorzugsweise angeschraubt sind und die Drehaxe der Räder (4, 5) mit der Verstellrichtung (2′, 3′) der Teleskope der Stativbeine (2, 3) sichtbar einen stumpfen Winkel einschließen (Fig. 1, 2, 8), dadurch gekennzeichnet, daß der Mittelteil des Transportwagens aus 2 Teilen (14, 15) besteht, und eine Abstellfläche für beliebige Transporttaschen bildet, die, zwecks Verstellen der Spurweite der Räder (4, 5), durch tragende Teleskopverbindungen (20, 21, 24, 25) in der Entfernung zueinander verstell- und fixierbar sind (Fig. 1 bis 5), und daß die Außenteile als (18, 19) des Transportwagens mit den Mittelteilen (14, 15) durch je eine scharnierartig wirkende Gelenkverbindung (16, 17) verbunden sind, deren Schwenkachse mindestens annährend parallel zur Fahrtrichtung liegt.

2. Transportwagen nach Anspruch 1, dadurch gekennzeichnet, daß die Breite des Transportwagens durch Verstellen der Spurweite der Räder (4, 5) verstellbar ist (Fig. 5).

3. Transportwagen nach einem der Ansprüche 1 und 2, dadurch gekennzeichnet, daß die Beine (2, 3) des Fotostatives (1) an den mittels Rädern (4, 5) fahrbahren Außenteilen (18, 19) des Transportwagens angeschraubt sind.

4. Transportwagen nach einem der Ansprüche 1-3, dadurch gekennzeichnet, daß an den im wesentlichen ebenen Mittelteilen (14, 15), an den quer zur Fahrtrichtung liegenden Rändern (26) aufragende Seitenwände (27) angeordnet sind.

5. Transportwagen nach einem der Ansprüche 1-4, dadurch gekennzeichnet, daß an den Außenteilen (18, 19), von den Rädern (4, 5) distanziert; je ein Standbein angeordnet ist.

6. Transportwagen nach einem der Ansprüche 1-5, dadurch gekennzeichnet, daß das zur Fixierung der Teleskopverbindungen erforderliche Rastglied (23) aus einem ösenförmig gebogenen Federstahlband (23′) besteht, dessen Enden in einem aus Kunststoff bestehenden Griffstück (23˝) eingeschlossen sind (Fig. 7).

7. Transportwagen nach einem der Ansprüche 1-6, dadurch gekennzeichnet daß die Abstellfläche sich unmittel bar über den Rädern befindet und dadurch einen tiefen Schwerpunkt des Transportwagens bildet.

## Claims

1. Transportation car with at least 2 wheels and a tripod; 2 legs (2, 3) of this tripod (1) are fastened, or preferably screwed, to the transportation car at their ends. The rotational axis of the wheels (4, 5) builds a visibly obtuse angle with the adjustable device (2′, 3′) of the tripod's telescopic legs (2, 3) (fig. 1, 2, 8), characterized by the fact that the central part of the transportation car consists of 2 parts (14, 15) whose distance can be adjusted and fastened (fig. 1-5) by supporting telescopic joints (20, 21, 24, 25) in order to change the rail gauge of the wheels (4, 5); they constitute a storage surface for any transportation bags. The outer parts (18, 19) of the transportation car are linked to the central elements (14, 15) by a joint which works like a hinge (16, 17) whose swivelling axis is at least approximately parallel to the cruising direction.

2. Transportation car according to claim no. 1, characterized by the fact that the width of the transportation car can be adjusted by adjusting the rail gauge of the wheels (4, 5) (fig. 5).

3. Transportation car according to one of the claims 1 or 2, characterized by the fact that the legs (2, 3) of the photographer's tripod are screwed on to the transportation car's outer parts (18, 19) of the transportation car which are rolling on the wheels (4, 5).

4. Transportation car according to one of the claims 1-3, characterized by the fact that on the essentially flat central parts (14, 15) are placed side walls (21) which rise above the edges (26) and are perpendicular to the cruising direction.

5. Transportation car according to one of the claims 1-4, characterized by the fact that one tripod leg is placed on the other elements (18, 19) at a certain distance from the wheels (4, 5).

6. Transportation car according to one of the claims 1-5, characterized by the fact that the locking device (23) required for fastening the telescopic joints, consists of a spring steel band (23′) which is bent like an eyelet; its ends are included in a plastic handle (23˝) (fig. 7).

7. Transportation car according to one of the claims 1-6, characterized by the fact that the storage surface is situated directly beneath the wheels, thus lowering the centre of gravity of the transportation car.

## Revendications

1. Chariot transporteur avec au moins 2 roues et un trépied, 2 pieds (2, 3) du trépied étant fixés, ou de préférence vissés, au chariot transporteur par leurs extrémités; l'axe de rotation des roues (4, 5) formant un angle visiblement obtus avec le dispositif d'ajustage (2′, 3′) des télescopes des pieds du trépied (2, 3) (fig. 1, 2, 8), caractérisé par le fait que la partie centrale du chariot transporteur est composée de 2 parties (14, 15) dont la distance peut être ajustée et fixée (fig. 1 à 5) par des jonctions télescopiques portantes (20, 21, 24, 25) afin de varier l'écartement des roues (4, 5) et qui constitue une surface d'arrêt pour n'importe quelle poche de transport. Les parties extérieures (18, 19) du chariot transporteur sont liées aux éléments centraux (14, 15) chacune par un élément articulé qui fonctionne comme une charnière (16, 17) dont l'axe de rotation est au moins approximativement parallèle au sens de la marche.

2. Chariot transporteur selon la revendication n° 1, caractérisé par le fait que la largeur du chariot transporteur peut être ajustée par l'ajustement de l'écartement des roues (4, 5) (fig. 5).

3. Chariot transporteur selon l'une des revendications 1 ou 2, caractérise par le fait que les pieds (2, 3) du trépied photographique (1) sont vissés aux parties extérieures (18, 19) du chariot transporteur qui roulent sur les roues (4, 5).

4. Chariot transporteur selon l'une des revendications 1 à 3, caractérisé par le fait que sur les éléments centraux essentiellement plans (14, 15) sont placées des parois latérales (27) qui s'élèvent sur les bords (26) pendiculaires au sens de la marche.

5. Chariot transporteur selon l'une des revendications 1 à 4, caractérisé par le fait que sur les éléments extérieurs (18, 19) est placé un pied du trépied à une certaine distance des roues (4, 5).

6. Chariot transporteur selon l'une des revendications 1 à 5, caractérisé par le fait que l'élément d'arrêt (23) nécessaire pour la fixation des jonctions télescopiques est composé d'un ruban d'acier à ressort plié en forme d'oeillet (23′) dont les extrémités sont enfermées dans une poignée en plastique (23˝) (fig. 7).

7. Chariot transporteur selon l'une des revendications 1 à 6, caractérisé par le fait que la surface d'arrêt se trouve directement au-dessus des roues, abaissant ainsi le centre de gravité du chariot transporteur.
